# EUROPÄISCHE PATENTSCHRIFT

(11) **EP 4 483 697 B1**
(45) Veröffentlichungstag und Bekanntmachung des Hinweises auf die Patenterteilung: **10.06.2026**
(21) Anmeldenummer: 24168612.0
(22) Anmeldetag: 05.04.2024
(51) Int. Cl.: A01D 41/12

(54) **SELBSTFAHRENDER MÄHDRESCHER**
SELF-PROPELLED COMBINE HARVESTER
MOISSONNEUSE-BATTEUSE AUTOMOTRICE

(30) Priorität: 27.06.2023 DE 102023116884
(43) Veröffentlichungstag der Anmeldung: 01.01.2025
(73) Patentinhaber: CLAAS Selbstfahrende Erntemaschinen GmbH, 33428 Harsewinkel (DE)
(72) Erfinder: Vieregge, Christopher, 32694 Dörentrup (DE); Diekamp, Andreas, 49176 Hilter (DE); Lütke Harmann, Tim, 48324 Sendenhorst (DE); Beckmann, Hermann-Konstantin, 32584 Löhne (DE)
(74) Vertreter: CLAAS Gruppe

(56) Entgegenhaltungen:
- EP-B1- 1 790 208
- DE-A1- 10 336 772
- DE-A1- 102020 111 603

## Beschreibung

Die vorliegende Erfindung betrifft einen selbstfahrenden Mähdrescher gemäß dem Oberbegriff des Anspruches 1.

Ein Mähdrescher der eingangs genannten Art ist aus der DE 10 2020 111 603 A1 bekannt. Der Streublechverteiler, auf als Spreuverteiler bezeichnet, ist an der Unterseite der Verteilvorrichtung sowie in einem Abstand von der Sauggebläsevorrichtung angeordnet, sodass die von der Reinigungsvorrichtung abgeschiedenen Pflanzenreste, im Wesentlichen eine Mischung aus Spreu und Kurzstroh, nach ihrem Austritt aus der Austrittsöffnung der der Reinigungsvorrichtung nachgeordneten Sauggebläsevorrichtung dem nach unten offenen Streublechverteiler zugeführt werden. Die mittels der von der Sauggebläsevorrichtung zugeführten kinematischen Energie an den Streublechverteiler zugeführten Pflanzenreste weisen eine Strömungsrichtung auf, die im Wesentlichen parallel zur Längsachse des Mähdreschers ausgerichtet ist. Die im Wesentlichen vertikal orientierten Leitelemente des Streublechverteilers dienen dazu, die Pflanzenreste möglichst gleichmäßig verteilt über eine Verteilbreite auszubringen. Die aus der Sauggebläsevorrichtung austretenden Pflanzenreste fächern beim Eintreten in den nach unten offenen Streublechverteiler in vertikaler Richtung auf. Durch zusätzlich durch die Umlenkung der Pflanzenreste an den Leitelementen wird die Auffächerung verstärkt, sodass die kinetische Energie, mit der die Pflanzenreste dem Streublechverteiler zugeführt werden, in Situationen mit Seitenwind nicht ausreicht, um eine gleichmäßige Verteilung über eine Verteilbreite zu erreichen.

Ausgehend vom vorstehend genannten Stand der Technik liegt der Erfindung die Aufgabe zugrunde, einen selbstfahrenden Mähdrescher der eingangs genannten Art weiterzubilden, welcher sich durch eine verbesserte Verteilung von Pflanzenresten durch den Streublechverteiler, insbesondere unter Seitenwindbedingungen, auszeichnet.

Diese Aufgabe wird erfindungsgemäß durch einen selbstfahrenden Mähdrescher mit den Merkmalen des Anspruches 1 gelöst. Vorteilhafte Weiterbildungen sind Gegenstand der hiervon abhängigen Ansprüche.

Es wird ein selbstfahrender Mähdrescher vorgeschlagen, umfassend:
- eine Abscheidevorrichtung zur Abscheidung von Körnern aus einem aus Körnern und Pflanzenresten bestehenden Gutstrom,
- eine Häckselvorrichtung zur Verarbeitung der von der Abscheidevorrichtung zugeführten Pflanzenreste,
- eine der Häckselvorrichtung nachgeordnete Verteilvorrichtung, die zur Ausbringung der von der Häckselvorrichtung zugeführten zerkleinerten Pflanzenreste eingerichtet ist,
- eine Reinigungsvorrichtung zur Reinigung der von der Abscheidevorrichtung zugeführten Körner von verbliebenen Pflanzenresten,
- eine der Reinigungsvorrichtung nachgeordnete Sauggebläsevorrichtung, welche durch die Reinigungsvorrichtung von den Körnern abgeschiedene Pflanzenreste durch eine Eintrittsöffnung der Sauggebläsevorrichtung ansaugt und die Pflanzenreste durch eine Austrittsöffnung der Sauggebläsevorrichtung an einen auf einer unterhalb der Verteilvorrichtung liegenden Ebene angeordneten, mehrere, im Wesentlichen vertikal orientierte, Leitelemente aufweisenden Streublechverteiler abgibt. Erfindungsgemäß ist vorgesehen, dass der Streublechverteiler zumindest abschnittsweise untenseitig geschlossen ausgeführt ist. Das abschnittsweise untenseitige Schließen des Streublechverteilers sorgt dafür, dass die Verteilung der durch den Streublechverteiler auszubringenden Pflanzenreste verbessert wird, da die Auffächerung der Pflanzenreste, insbesondere in vertikaler Richtung, räumlich verzögert wird. Die zumindest abschnittsweise Kanalisierung durch das zumindest abschnittsweise untenseitige Schließen des Streublechverteilers wirkt sich strömungstechnisch positiv auf die erzielbare Verteilbreite der Pflanzenreste, insbesondere bei Seitenwind, aus.

Insbesondere kann der Streublechverteiler ein Deckelelement, an welchem die Leitelemente sich im Wesentlichen vertikal nach unten erstreckend angeordnet sind, sowie ein durch die Leitelemente zum Deckelelement in vertikaler Richtung beabstandet angeordnetes Bodenelement, aufweisen, welches den Streublechverteiler zumindest abschnittsweise untenseitig verschließt. Dabei kann das Bodenelement zumindest abschnittsweise im Wesentlichen parallel zum Deckelelement verlaufend angeordnet sein. Denkbar ist auch, dass der vertikale Abstand zwischen außenseitigen Abschnitten des Bodenelements zum Deckelelement abweichen, sich insbesondere verringern, kann. Weiterhin kann vorgesehen sein, dass das Bodenelement ausgehend von einem Mittenabschnitt zu seinen Randbereichen hin eine Neigung aufweist. Bevorzugt kann die Neigung derart gewählt sein, dass das Bodenelement zu den Randbereichen hin ansteigend ausgeführt ist.

Bevorzugt können sich die Leitbleche in Längsrichtung des Mähdreschers gesehen im Wesentlichen bis zum querverlaufenden äußeren Rand des Deckelelements erstrecken.

Dabei können die Leitbleche, bezogen auf eine Mittellängsachse des Mähdreschers, einen nach außen gekrümmten Verlauf aufweisen. Die nebeneinander angeordnet Leitelemente weisen sich zwischen benachbarten Leitelementen - in Strömungsrichtung der Pflanzenreste betrachtet -sich über die Länge der Leitelemente hinweg vergrößernde Abstände zueinander auf. Mit anderen Worten sind die Leitelemente im Wesentlichen fächerartig angeordnet, sodass die dem Streublechverteiler zugeführten Pflanzenreste mittels der Leitelemente quer zur Mittellängsachse des Mähdreschers verteilbar sind. Die in einer Überfahrt zur Verfügung stehende Breite zur Verteilung der Pflanzenreste wird hierbei maßgeblich von einem in einem vorderen Bereich des Mähdreschers angeordnetem Vorsatzgerät bestimmt.

Bevorzugt kann sich das Bodenelement, in Längsrichtung des Mähdreschers, gesehen zumindest über das erste Drittel der Leitbleche erstrecken. Diese Mindestausdehnung bzw. -erstreckung des Bodenelementes, ausgehend von der der Sauggebläsevorrichtung zugewandten Seite des Streublechverteilers hat sich als vorteilhaft erwiesen, um die vorhandene kinetische Energie des Gemisches aus Luft und Pflanzenresten auch bei auftretenden Seitenwinden in dem Maße nutzen zu können, um die angestrebte Verteilbreite im Wesentlichen zu erreichen.

Weiterhin kann sich das Bodenelement über die gesamte Breite des Deckelelements erstrecken. Insbesondere in den äußeren Randbereichen des Streublechverteilers ist der Einfluss von Seitenwind auf die Verteilbreite stärker ausgeprägt, da in diesem Bereich die Pflanzenreste aufgrund der stärkeren Krümmung der Leitelemente eine längere Wegstrecke im Streublechverteiler zurücklegen müssen, als beispielsweise in der Mitte des Streublechverteilers.

Weiter bevorzugt kann das Bodenelement mit außenseitig angeordneten, den Streublechverteiler randseitig begrenzenden Wandungen bündig abschließen.

Gemäß einer bevorzugten Weiterbildung kann auf der Oberseite des Deckelelements ein Bypasselement angeordnet sein, welches aus im Bereich eines Gegenmesserkamms der Häckselvorrichtung austretende zerkleinerte Pflanzenreste einem nach oben zumindest abschnittsweise offen ausgeführten kanalförmigen Übergangsbereich zwischen der Austrittsöffnung der Sauggebläsevorrichtung und dem Streublechverteiler zuführt und/oder in diesen ablenkt. Hierdurch können am Gegenmesserkamm auftretende Strohverluste, im Wesentlichen in Form von Kurzstroh, die beim Häckseln der von der Abscheidevorrichtung der Häckselvorrichtung zugeführten Pflanzenreste auftreten, dem Streublechverteiler zur Verteilung mit den von der Reinigungsvorrichtung kommenden Pflanzenresten zugeführt werden. Dadurch kann unerwünschten Ablagerungen auf dem Streublechverteiler, aber auch unkontrollierter Verteilung auf dem Feld, begegnet werden.

Hierzu kann das im Wesentlichen plattenförmig ausgeführte Bypasselement unter einem Winkel zur Oberseite des Deckelelements geneigt angeordnet sein. Somit kann sich zwischen einem die Sauggebläsevorrichtung umgebenden Gehäuse oder Gehäuseabschnitt und dem Bypasselement eine trichterförmige Anordnung ausbilden, welche die nahezu vollständige Annahme der am Gegenmesserkamm auftretenden Strohverluste ermöglicht.

Weiter bevorzugt kann das Bypasselement mit einer veränderbaren Neigung auf der Oberseite des Deckelelements angeordnet sein. Hierdurch lässt sich eine Anpassung an unterschiedliche Betriebsbedingungen, insbesondere bei einer Drehzahlveränderung der Häckselvorrichtung, erreichen, um die Annahme der Strohverluste zu gewährleisten.

Insbesondere kann das Bypasselement einen am Deckelelement angelenkten ersten Abschnitt aufweisen, an dem ein zweiter Abschnitt angeordnet ist, welcher gegenüber dem ersten Abschnitt relativbeweglich ist. Der zweite Abschnitt ist gegenüber dem ersten Abschnitt telekopierbar ausgeführt, wodurch eine Längenänderung des Bypasselementes ermöglicht wird, wenn dessen Neigung zur Oberseite des Deckelelements verändert wird.

Insbesondere kann das Bodenelement einteilig oder mehrteilig, insbesondere zweiteilig, ausgeführt sein.

Bevorzugt kann das Bodenelement lösbar am Streublechverteiler befestigt sein. Hierdurch ist eine Anpassung der Erstreckung des Bodenelementes in Längsrichtung des Streublechverteilers denkbar, um durch Umbau bei Bedarf eine Anpassung an, insbesondere regionale, Seitenwindverhältnisse zu ermöglichen.

Die vorliegende Erfindung wird nachstehend anhand eines in den Zeichnungen dargestellten Ausführungsbeispieles näher erläutert.

Es zeigen:
- Fig. 1: schematisch und exemplarisch eine Darstellung eines selbstfahrenden Mähdreschers in Seitenansicht;
- Fig. 2: schematisch und exemplarisch eine Teilansicht eines rückwärtigen Bereichs des Mähdreschers im Längsschnitt;
- Fig. 3: eine Teilansicht einer Sauggebläsevorrichtung und eines dieser nachgeordneten Streublechverteilers in einer Ansicht von unten;
- Fig. 4: die Teilansicht gemäß Fig. 3 von hinten; und
- Fig. 5: schematisch und exemplarisch eine mehrteilige Ausführung eines Bodenelementes des Streublechverteilers gemäß Fig. 3.

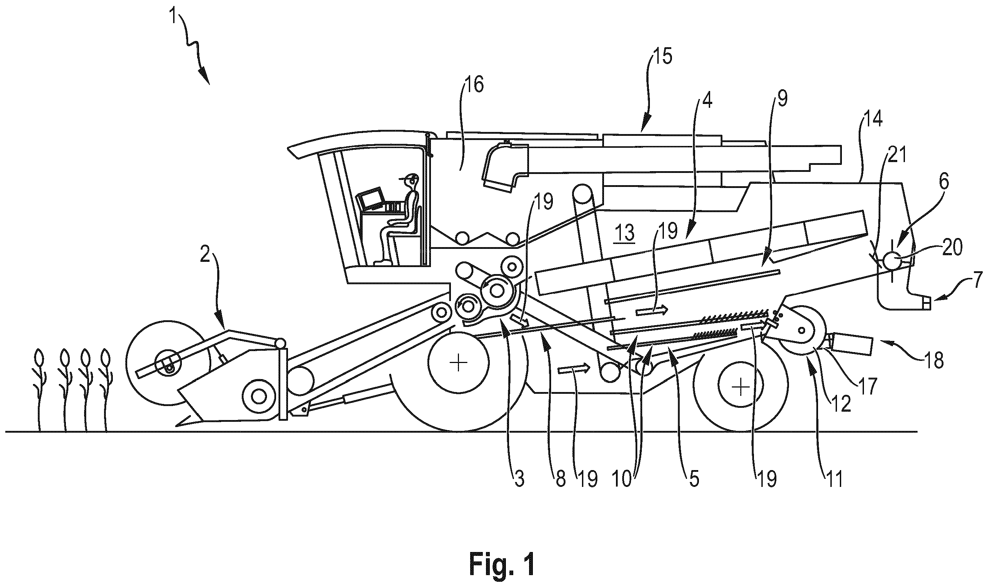

In Fig. 1 ist schematisch und exemplarisch eine Darstellung eines selbstfahrenden Mähdreschers 1 in Seitenansicht gezeigt. Der Mähdrescher 1 umfasst ein als Schneidwerk ausgeführtes Vorsatzgerät 2, eine Dreschvorrichtung 3, die als ein Mehrtrommeldreschwerk ausgeführt ist, eine Abscheidevorrichtung 4, die hier und vorzugsweise als zumindest ein nach dem Axialflussprinzip arbeitender Trennrotor ausgeführt ist, eine Reinigungsvorrichtung 5, eine Häckselvorrichtung 6 sowie eine Verteilvorrichtung 7, die hier und vorzugsweise als Radialverteiler ausgeführt ist.

Die Dreschvorrichtung 3, die Abscheidevorrichtung 4, die Reinigungsvorrichtung 5 sowie die Häckselvorrichtung 6 sind zumindest teilweise von einem Maschinengehäuse 14 umgeben, in welchem sich ein im Wesentlichen geschlossener Prozessraum 13 ausbildet. Unterhalb der Dreschvorrichtung 3 ist ein oszillierend angetriebener Vorbereitungsboden 8 angeordnet. Unterhalb der Abscheidevorrichtung 4 ist ein ebenfalls oszillierend angetriebener Rücklaufboden 9 angeordnet, der sich im Wesentlichen parallel zu der Abscheidevorrichtung 3 erstreckt. Die Reinigungsvorrichtung 5 umfasst zumindest zwei Reinigungssiebe 10, von denen eines als Obersieb und eines als Untersieb ausgeführt ist. Der Vorbereitungsboden 8 liegt oberhalb der Siebebene der Reinigungsvorrichtung 5, hier des Obersiebes der Reinigungssiebe 10.

Der Reinigungsvorrichtung 5 ist eine Sauggebläsevorrichtung 11 mit zumindest einem Sauggebläse nachgeordnet. Die Sauggebläsevorrichtung 11 dient als Reinigungsgebläse der Reinigungsvorrichtung 4. Die Sauggebläsevorrichtung 11 weist ein Gehäuse 12 auf, in welchem zumindest ein Läufer des zumindest einen Sauggebläses um eine horizontal verlaufende Achse rotiert, um einen - durch einen Pfeil exemplarisch veranschaulichten - Saugluftstrom 19 durch zumindest eine Eintrittsöffnung im Gehäuse 12 aus dem Prozessraum 13 des Mähdreschers 1 anzusaugen. Der Prozessraum 13 trennt die darin angeordneten Arbeitsorgane zur Bearbeitung des aufgenommenen Erntegutes von anderen Arbeitsaggregaten, wie beispielsweise dem Antriebstrang, der einen als Verbrennungsmotor ausgeführten Antriebsmotor 15 umfasst, oder anderen Baugruppen, wie einen Korntank 16 des Mähdreschers 1.

In dem Prozessraum 13 sind die Dreschvorrichtung 3, die Abscheidevorrichtung 4, die Reinigungsvorrichtung 5 sowie die Häckselvorrichtung 6 angeordnet. Der dem Prozessraum 13 entnommene Saugluftstrom 19 durchströmt dabei unter anderem die Reinigungssiebe 10 der Reinigungsvorrichtung 5.

An das Gehäuse 12 der Sauggebläsevorrichtung 11 schließt sich ein kanalförmiger Übergangsbereich 17 an, welcher die Sauggebläsevorrichtung 11 mit einem Streublechverteiler 18 strömungstechnisch verbindet. Die Sauggebläsevorrichtung 11 saugt den Saugluftstrom 19, der im Wesentlichen im Bereich der Dreschvorrichtung 3 sowie vor der Reinigungsvorrichtung 5 als auch unterhalb des Vorbereitungsbodens 8 zugeführt wird, an.

Während des Durchströmens des Prozessraumes 13 werden von dem Saugluftstrom 19 Pflanzenreste, die leichter als die von der Reinigungsvorrichtung 5 durch die Reinigungssiebe 10 abgeschiedenen Körner sind, mitgeführt. Bei den Pflanzenresten handelt es sich im Wesentlichen um Spreu und Kurzstroh. Nach dem Um- und Durchströmen des Vorbereitungsbodens 8 und der Reinigungssiebe 10 der Reinigungsvorrichtung 5 verlässt der Saugluftstrom 19 zusammen mit den darin enthaltenen Pflanzenresten die Sauggebläsevorrichtung 11 durch zumindest eine Austrittsöffnung. Durch den sich an die zumindest eine Austrittsöffnung anschließenden Übergangsbereich 17 strömt der von der Sauggebläsevorrichtung 11 aus dem Prozessraum 13 angesaugte Saugluftstrom 19 zusammen mit den darin enthaltenen Pflanzenresten zum Streublechverteiler 18 weiter. Der Streublechverteiler 18 ist auf einer unterhalb der Verteilvorrichtung 7 liegenden Ebene angeordnet.

Die Häckselvorrichtung 6 weist einen mit Messern besetzten, rotierend angetriebenen Häckselrotor 20 sowie einen ortsfest angeordneten Gegenmesserkamm 21 auf.

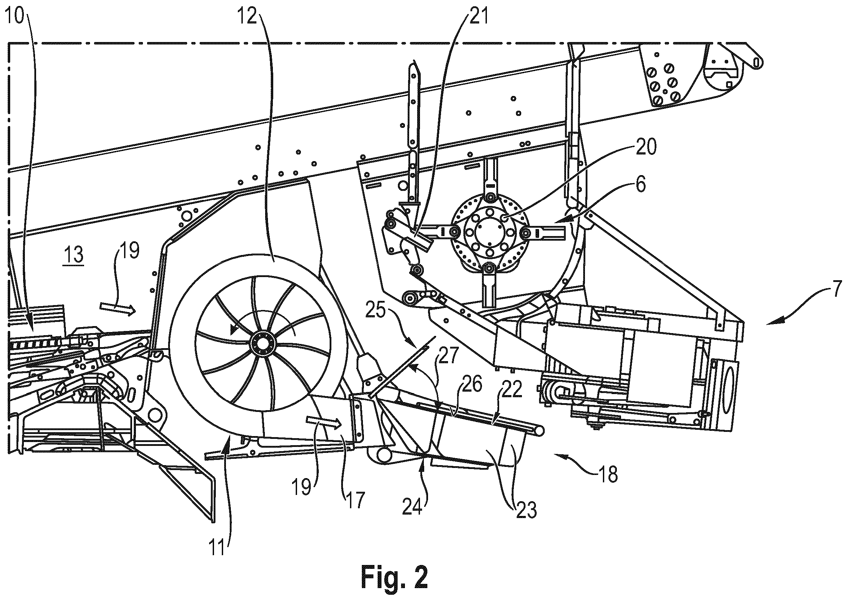

In Fig. 2 ist schematisch und exemplarisch eine Teilansicht eines rückwärtigen Bereichs des Mähdreschers 1 im Längsschnitt dargestellt. Der Streublechverteiler 18 weist ein Deckelelement 22, an welchem die Leitelemente 23 sich im Wesentlichen vertikal nach unten erstreckend angeordnet sind. Weiterhin weist der Streublechverteiler 18 ein Bodenelement 24 auf, welches parallel zum Deckelelement 22 angeordnet ist. Das Bodenelement 24 ist durch die Leitelemente 23 vom Deckelelement 22 beabstandet.

Auf seiner auf der Häckselvorrichtung 6 zugewandten Oberseite 26 des Deckelelements 22 ist ein Bypasselement 25 angeordnet. Das Bypasselement 25 dient dazu, aus der Häckselvorrichtung 6 im Bereich des Gegenmesserkamms 21 austretende zerkleinerte Pflanzenreste dem nach oben zumindest abschnittsweise offen ausgeführten kanalförmigen Übergangsbereich 17 zwischen der Austrittsöffnung der Sauggebläsevorrichtung 11 und dem Streublechverteiler 18 zuzuführen oder in diesen abzulenken. Bevorzugt ist der Übergangsbereich 17 zumindest über die Breite des Gegenmesserkamms 21 hinweg nach oben offen ausgeführt.

Das Bypasselement 25 ist im Wesentlichen plattenförmig ausgeführt. Das Bypasselement 25 ist unter einem Winkel 27 zur Oberseite 26 des Deckelelements 22 geneigt angeordnet. Somit bildet sich zwischen dem Gehäuse 12 und dem Bypasselement 25 eine trichterförmige Anordnung aus, welche die nahezu vollständige Annahme der am Gegenmesserkamm 21 auftretenden Strohverluste ermöglicht. Bevorzugt kann das Bypasselement 25 mit einer veränderbaren Neigung auf der Oberseite 26 des Deckelelements 22 angeordnet sein, sodass der zwischen dem Bypasselement 25 und der Oberseite 26 eingeschlossene Winkel 27 veränderbar ist.

Gemäß einem weiteren Aspekt kann vorgesehen sein, dass das plattenförmig ausgeführte Bypasselement 25 einen am Deckelelement 22 angelenkten ersten Abschnitt aufweist. An dem ersten Abschnitt kann ein zweiter, parallel verlaufender Abschnitt angeordnet sein, welcher gegenüber dem ersten Abschnitt relativbeweglich, d.h. teleskopierbar, ist, um die Länge des Bypasselementes 25 variieren zu können.

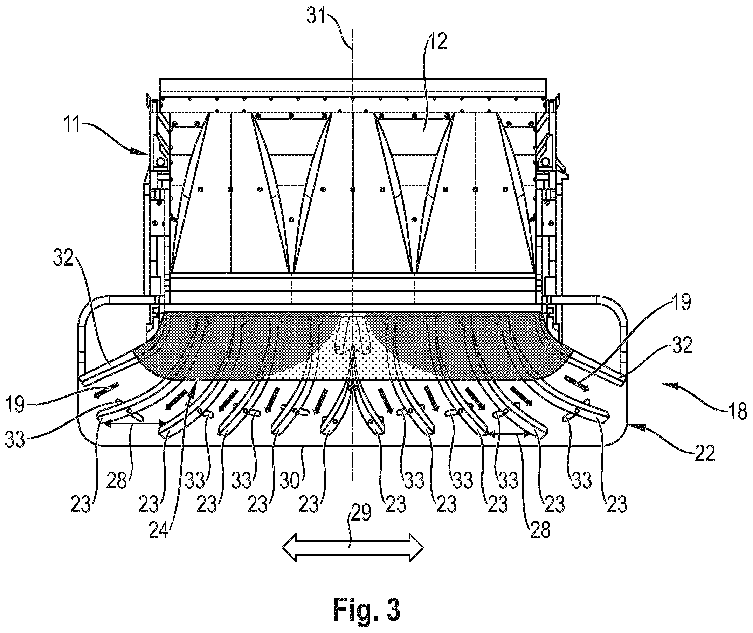

Die Darstellung in Fig. 3 zeigt eine Teilansicht der Sauggebläsevorrichtung 11 und des dieser nachgeordneten Streublechverteilers 18 in einer Ansicht von unten. Der Streublechverteiler 18 ist im Wesentlichen aus der Mehrzahl von Leitelementen 23 in Form von Blechen ausgebildet. Zwischen benachbarten Leitelementen 23 vergrößern sich Abstände 28 zwischen - in Strömungsrichtung des die Pflanzenreste mit sich führenden Saugluftstroms 19 betrachtet - über die Länge der Leitelemente 23 hinweg.

Die Leitelemente 23 können an ihren dem Übergangsbereich 17 zugewandten Enden um eine vertikal verlaufende Achse schwenkbar angelenkt sein. Die freien Enden der Leitelemente 23 können in bogenförmigen Langlöchern 33 auf dem Deckelelement 22 abschnittsweise in Querrichtung 29 verschieblich geführt sein. Auf der Oberseite 26 des Deckelelements 22 können lösbare Arretiermittel vorgesehen sein, um die durch Verschwenken der Leitelemente 23 innerhalb der Langlöcher 33 eingestellte Position zu fixieren.

Mittels der den Pflanzenresten von der Sauggebläsevorrichtung 11 zugeführten kinetischen Energie werden diese dem Streublechverteiler 18 zugeführt. Durch das Auftreffen der Pflanzenreste auf die Leitelemente 23 wird die Strömungsrichtung derart verändert, dass die Pflanzenreste in Querrichtung 29 abgelenkt und dabei gewissermaßen "aufgefächert" werden. Die Pflanzenreste werden in einer ersten Schicht auf dem Feld hinter dem Mähdrescher 1 ausgeworfen.

Die Leitbleche 23 erstrecken sich in Längsrichtung des Mähdreschers 1 gesehen im Wesentlichen bis zum querverlaufenden äußeren Rand 30 des Deckelelements 22. Die Leitbleche 23 weisen, bezogen auf eine Mittellängsachse 31 des Mähdreschers 1, einen nach außen gekrümmten Verlauf auf.

Das Bodenelement 24 erstreckt sich in Längsrichtung des Mähdreschers 1 gesehen zumindest über das erste Drittel der Leitbleche 23 hinweg. Dabei erstreckt sich das Bodenelement 24 über die gesamte Breite des Deckelelements 22. Zwischen dem Deckelelement 22 und dem Bodenelement 24 bilden sich zwischen den Leitelementen 23 in Umfangsrichtung geschlossene Strömungsabschnitt aus.

Das Bodenelement 24 schließt mit außenseitig angeordneten, den Streublechverteiler 18 randseitig begrenzenden Wandungen 32 bündig ab.

Das Bodenelement 24 kann lösbar am Streublechverteiler 18 befestigt sein. Hierdurch ist eine Anpassung der Erstreckung des Bodenelementes 24 in Längsrichtung des Streublechverteilers 18 denkbar, um durch einen Austausch des Bodenelementes 24 die Erstreckung und damit das, in Längsrichtung des Mähdreschers 1 gesehen, abschnittsweise untenseitige Verschließen des Streublechverteilers 18 bei Bedarf anzupassen. Hierdurch kann die Verweildauer des austretenden Saugluftstroms 19 variiert werden.

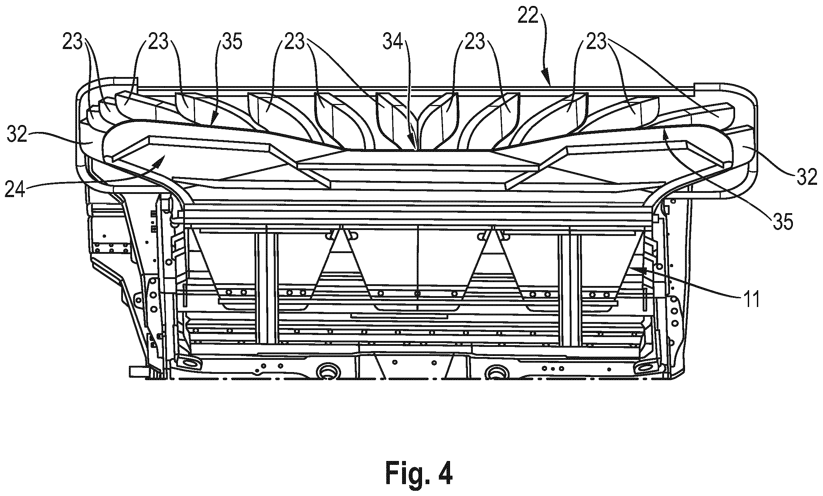

Die Darstellung in Fig. 4 zeigt eine Teilansicht des Streublechverteilers 18 gemäß Fig. 3 von hinten. In Fig. 4 ist die fächerförmige Anordnung der Leitbleche 23 an der Unterseite des Deckelelements 22 zu erkennen. Das Bodenelement 24 ist hier und vorzugsweise einteilig ausgeführt. Im Bereich der beiden mittig angeordneten Leitbelche 23, welche eine gegensinnige Krümmung aufweisen, kann das Bodenelement 24 einen zwickelförmigen Abschnitt 34 aufweisen. Die Vorderkante des Abschnitts 34 weist, in Längsrichtung des Mähdreschers 1 gesehen, einen geringeren axialen Abstand zum Übergangsbereich 17 als die Vorderkanten von zum zwickelförmigen Abschnitt 34 benachbarter Abschnitte 35 des Bodenelements 24.

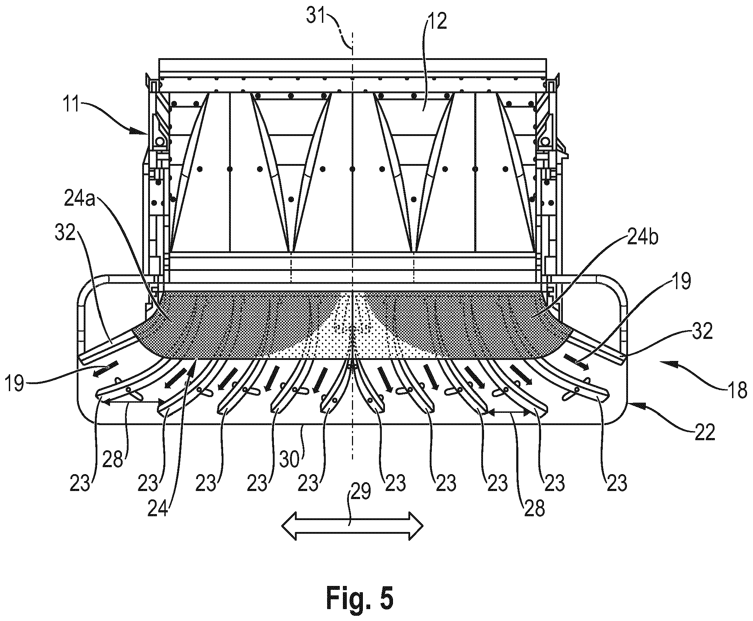

Das Bodenelement 24 kann einteilig oder mehrteilig ausgeführt sein. In Fig. 5 ist schematisch und exemplarisch eine mehrteilige Ausführung des Bodenelementes 24 des Streublechverteilers 18 gemäß Fig. 3 gezeigt. Das hier zweiteilig ausgeführte Bodenelement 24 weist Bodensegmente 24a, 24b auf. Die Bodensegmente 24a, 2b können die als Gleichteile ausgeführt sein, welche bezogen auf die Mittellängsachse 31 des Mähdreschers 1 spiegelbildlich angeordnet sind.

### Bezugszeichenliste

| | | | |
|---|---|---|---|
| 1 | Mähdrescher | 32 | Wandung |
| 2 | Vorsatzgerät | 33 | Langloch |
| 3 | Dreschvorrichtung | 34 | Zwickelförmiger Abschnitt |
| 4 | Abscheidevorrichtung | 35 | Abschnitt |
| 5 | Reinigungsvorrichtung | | |
| 6 | Häckselvorrichtung | | |
| 7 | Verteilvorrichtung | | |
| 8 | Vorbereitungsboden | | |
| 9 | Rücklaufboden | | |
| 10 | Reinigungssieb | | |
| 11 | Sauggebläsevorrichtung | | |
| 12 | Gehäuse | | |
| 13 | Prozessraum | | |
| 14 | Maschinengehäuse | | |
| 15 | Antriebsmotor | | |
| 16 | Korntank | | |
| 17 | Übergangsbereich | | |
| 18 | Streublechverteiler | | |
| 19 | Saugluftstrom | | |
| 20 | Häckselrotor | | |
| 21 | Gegenmesserkamm | | |
| 22 | Deckelelement | | |
| 23 | Leitelement | | |
| 24 | Bodenelement | | |
| 24a | Bodensegment | | |
| 24b | Bodensegment | | |
| 25 | Bypasselement | | |
| 26 | Oberseite | | |
| 27 | Winkel | | |
| 28 | Abstand | | |
| 29 | Querrichtung | | |
| 30 | Rand | | |
| 31 | Mittellängsachse | | |

## Patentansprüche

1. Selbstfahrender Mähdrescher (1), umfassend:
- eine Abscheidevorrichtung (4) zur Abscheidung von Körnern aus einem aus Körnern und Pflanzenresten bestehenden Gutstrom,
- eine Häckselvorrichtung (6) zur Verarbeitung der von der Abscheidevorrichtung (4) zugeführten Pflanzenreste,
- eine der Häckselvorrichtung (6) nachgeordnete Verteilvorrichtung (7), die zur Ausbringung der von der Häckselvorrichtung (6) zugeführten zerkleinerten Pflanzenreste eingerichtet ist,
- eine Reinigungsvorrichtung (5) zur Reinigung der von der Abscheidevorrichtung (4) zugeführten Körner von verbliebenen Pflanzenresten,
- eine der Reinigungsvorrichtung (5) nachgeordnete Sauggebläsevorrichtung (11), welche durch die Reinigungsvorrichtung (5) von den Körnern abgeschiedene Pflanzenreste durch zumindest eine Eintrittsöffnung der Sauggebläsevorrichtung (11) ansaugt und die Pflanzenreste durch zumindest eine Austrittsöffnung der Sauggebläsevorrichtung (11) an einen auf einer unterhalb der Verteilvorrichtung (7) liegenden Ebene angeordneten, mehrere Leitelemente (23) aufweisenden Streublechverteiler (18) abgibt, **dadurch gekennzeichnet, dass** der Streublechverteiler (18) zumindest abschnittsweise untenseitig und obenseitig geschlossen ausgeführt ist.

2. Mähdrescher (1) nach Anspruch 1, **dadurch gekennzeichnet, dass** der Streublechverteiler (18) ein Deckelelement (22), an welchem die Leitelemente (23) sich im Wesentlichen vertikal nach unten erstreckend angeordnet sind, sowie zumindest ein durch die Leitelemente (23) zum Deckelelement (22) in vertikaler Richtung beabstandet angeordnetes Bodenelement (24), aufweist.

3. Mähdrescher (1) nach Anspruch 2, **dadurch gekennzeichnet, dass** sich die Leitbleche (23) in Längsrichtung des Mähdreschers (1) gesehen im Wesentlichen bis zum querverlaufenden äußeren Rand (30) des Deckelelements (22) erstrecken.

4. Mähdrescher (1) nach einem der Ansprüche 1 bis 3, **dadurch gekennzeichnet, dass** die Leitbleche (23), bezogen auf eine Mittellängsachse (31) des Mähdreschers (1), einen nach außen gekrümmten Verlauf aufweisen.

5. Mähdrescher (1) nach einem der Ansprüche 2 oder 3, **dadurch gekennzeichnet, dass** sich das Bodenelement (24) in Längsrichtung des Mähdreschers (1) gesehen zumindest über das erste Drittel der Leitbleche (23) erstreckt.

6. Mähdrescher (1) nach einem der Ansprüche 2 bis 5, **dadurch gekennzeichnet, dass** sich das Bodenelement (24) über die gesamte Breite des Deckelelements (22) erstreckt.

7. Mähdrescher (1) nach einem der Ansprüche 2-6, **dadurch gekennzeichnet, dass** das Bodenelement (24) mit außenseitig angeordneten, den Streublechverteiler (18) randseitig begrenzenden Wandungen (32) bündig abschließt.

8. Mähdrescher (1) nach einem der Ansprüche 2-7, **dadurch gekennzeichnet, dass** auf der Oberseite (26) des Deckelelements (22) ein Bypasselement (25) angeordnet ist, welches aus im Bereich eines Gegenmesserkamms (21) der Häckselvorrichtung (6) austretende zerkleinerte Pflanzenreste einem nach oben zumindest abschnittsweise offen ausgeführten kanalförmigen Übergangsbereich (17) zwischen der Austrittsöffnung der Sauggebläsevorrichtung (11) und dem Streublechverteiler (18) zuführt und/oder in diesen ablenkt.

9. Mähdrescher (1) nach Anspruch 8, **dadurch gekennzeichnet, dass** das im Wesentlichen plattenförmig ausgeführte Bypasselement (25) unter einem Winkel (27) zur Oberseite (26) des Deckelelements (22) geneigt angeordnet ist.

10. Mähdrescher (1) nach Anspruch 8 oder 9, **dadurch gekennzeichnet, dass** das Bypasselement (25) mit einer veränderbaren Neigung auf der Oberseite (26) des Deckelelements (22) angeordnet ist.

11. Mähdrescher (1) nach einem der Ansprüche 8 bis 10, **dadurch gekennzeichnet, dass** das Bypasselement (25) einen am Deckelelement (22) angelenkten ersten Abschnitt aufweist, an dem ein zweiter Abschnitt angeordnet ist, welcher gegenüber dem ersten Abschnitt relativbeweglich ist.

12. Mähdrescher (1) nach einem der Ansprüche 2-11, **dadurch gekennzeichnet, dass** das Bodenelement (24) einteilig oder mehrteilig, insbesondere zweiteilig, ausgeführt ist.

13. Mähdrescher (1) nach einem der Ansprüche 2-12, **dadurch gekennzeichnet, dass** das Bodenelement (24) lösbar am Streublechverteiler (18) befestigt ist.

## Claims

1. Self-propelled combine harvester (1) comprising:
- a separating device (4) for separating grains from a stream of material consisting of grains and plant residues,
- a chopping device (6) for processing the plant residues fed by the separating device (4),
- a distributing device (7) which is arranged downstream of the chopping device (6) and is configured to discharge the comminuted plant residues fed by the chopping device (6),
- a cleaning device (5) for cleaning the grains fed by the separating device (4) of remaining plant residues,
- a suction-fan device (11) which is arranged downstream of the cleaning device (5) and sucks plant residues separated from the grains by the cleaning device (5) in through at least one inlet opening of the suction-fan device (11) and delivers the plant residues to a spreader-plate distributor (18) through at least one outlet opening of the suction-fan device (11), said spreader-plate distributor being arranged on a plane which lies below the distributing device (7) and having multiple guide elements (23), **characterized in that** the spreader-plate distributor (18) is designed to be closed at least sectionally on the bottom side and on the top side.

2. Combine harvester (1) according to Claim 1, **characterized in that** the spreader-plate distributor (18) has a cover element (22), on which the guide elements (23) are arranged so as to extend substantially vertically downwards, and at least one base element (24), which is arranged spaced apart in a vertical direction from the cover element (22) by the guide elements (23).

3. Combine harvester (1) according to Claim 2, **characterized in that**, when seen in the longitudinal direction of the combine harvester (1), the guide plates (23) extend substantially as far as the transverse outer edge (30) of the cover element (22).

4. Combine harvester (1) according to one of Claims 1 to 3, **characterized in that**, in relation to a central longitudinal axis (31) of the combine harvester (1), the guide plates (23) have an outwardly curved profile.

5. Combine harvester (1) according to either of Claims 2 and 3, **characterized in that**, when seen in the longitudinal direction of the combine harvester (1), the base element (24) extends at least over the first third of the guid plates (23).

6. Combine harvester (1) according to one of Claims 2 to 5, **characterized in that** the base element (24) extends over the entire width of the cover element (22).

7. Combine harvester (1) according to one of Claims 2-6, **characterized in that** the base element (24) terminates flush with externally arranged walls (32) which delimit the spreader-plate distributor (18) at the edge side.

8. Combine harvester (1) according to one of Claims 2-7, **characterized in that**, on the top side (26) of the cover element (22), there is arranged a bypass element (25) which feeds comminuted plant residues exiting the chopping device (6) in the region of a counterpart-blade comb (21) to an upwardly at least sectionally open channel-shaped transition region (17) between the outlet opening of the suction-fan device (11) and the spreading-plate distributor (18) and/or diverts said comminuted plant residues into this.

9. Combine harvester (1) according to Claim 8, **characterized in that** the substantially plate-shaped bypass element (25) is arranged inclined at an angle (27) to the top side (26) of the cover element (22).

10. Combine harvester (1) according to Claim 8 or 9, **characterized in that** the bypass element (25) is arranged with a variable inclination on the top side (26) of the cover element (22).

11. Combine harvester (1) according to one of Claims 8 to 10, **characterized in that** the bypass element (25) has a first portion articulated on the cover element (22), on which first portion there is arranged a second portion which is relatively movable with respect to the first portion.

12. Combine harvester (1) according to one of Claims 2-11, **characterized in that** the base element (24) is of one-part or multi-part, in particular two-part, form.

13. Combine harvester (1) according to one of Claims 2-12, **characterized in that** the base element (24) is fastened releasably to the spreader-plate distributor (18).

## Revendications

1. Moissonneuse-batteuse (1) automotrice, comprenant :
- un dispositif de séparation (4) destiné à séparer des grains à partir d'un flux de produits constitué de grains et de résidus végétaux,
- un dispositif de hachage (6) destiné au traitement des résidus végétaux amenés par le dispositif de séparation (4),
- un dispositif d'épandage (7) qui est placé à la suite du dispositif de hachage (6) et est agencé pour l'évacuation des résidus végétaux hachés, amenés depuis le dispositif de hachage (6),
- un dispositif de nettoyage (5) destiné à nettoyer les grains amenés depuis le dispositif de séparation (4) afin d'éliminer des restes de résidus végétaux,
- un dispositif de ventilateur aspirant (11) qui est placé à la suite du dispositif de nettoyage (5) et qui aspire les résidus végétaux séparés des grains par le dispositif de nettoyage (5), à travers au moins une ouverture d'entrée du dispositif de ventilateur aspirant (11), et délivre les résidus végétaux à travers au moins une ouverture de sortie du dispositif de ventilateur aspirant (11) à un épandeur à tôles d'éparpillement (18) qui est placé sur un plan situé en dessous du dispositif d'épandage (7) et présente plusieurs éléments de guidage (23), **caractérisée en ce que** l'épandeur à tôles d'éparpillement (18) est réalisé au moins par portions sous une forme fermée, côté supérieur et côté inférieur.

2. Moissonneuse-batteuse (1) selon la revendication 1, **caractérisée en ce que** l'épandeur à tôles d'éparpillement (18) présente un élément de couvercle (22) sur lequel les éléments de guidage (23) sont disposés en s'étendant de manière sensiblement verticale vers le bas, ainsi qu'au moins un élément de fond (24) disposé en étant espacé dans la direction verticale de l'élément formant couvercle (22) par les éléments de guidage (23).

3. Moissonneuse-batteuse (1) selon la revendication 2, **caractérisée en ce que** les tôles de guidage (23) s'étendent sensiblement jusqu'au bord extérieur (30) transversal de l'élément de couvercle (22), vu dans la direction longitudinale de la moissonneuse-batteuse (1).

4. Moissonneuse-batteuse (1) selon une des revendications 1 à 3, **caractérisée en ce que** les tôles de guidage (23) présentent une forme incurvée vers l'extérieur par rapport à un axe longitudinal médian (31) de la moissonneuse-batteuse (1).

5. Moissonneuse-batteuse (1) selon une des revendications 2 ou 3, **caractérisée en ce que** l'élément de fond (24) s'étend au moins sur le premier tiers des tôles de guidage (23), vu dans le sens longitudinal de la moissonneuse-batteuse (1).

6. Moissonneuse-batteuse (1) selon une des revendications 2 à 5, **caractérisée en ce que** l'élément de fond (24) s'étend sur toute la largeur de l'élément de couvercle (22).

7. Moissonneuse-batteuse (1) selon une des revendications 2 à 6, **caractérisée en ce que** l'élément de fond (24) se termine en affleurant des parois (32) disposées côté extérieur et délimitant l'épandeur à tôles d'éparpillement (18) sur les bords.

8. Moissonneuse-batteuse (1) selon une des revendications 2 à 7, **caractérisée en ce qu'**il est prévu sur la face supérieure (26) de l'élément de couvercle (22), un élément de dérivation (25) qui amène des résidus végétaux hachés, sortant dans la zone d'un peigne de contre-couteaux (21) du dispositif de hachage (6), à une zone de transition (17) en forme de conduit, réalisée sous une forme ouverte vers le haut, au moins par portions, entre l'ouverture de sortie du dispositif de ventilateur aspirant (11) et l'épandeur à tôles d'éparpillement (18), et/ou les dévie vers celle-ci.

9. Moissonneuse-batteuse (1) selon la revendication 8, **caractérisée en ce que** l'élément de dérivation (25) réalisé sensiblement sous forme de plaque est disposé en étant incliné sous un angle (27) par rapport à la face supérieure (26) de l'élément de couvercle (22).

10. Moissonneuse-batteuse (1) selon la revendication 8 ou 9, **caractérisée en ce que** l'élément de dérivation (25) est disposé avec une inclinaison variable sur la face supérieure (26) de l'élément de couvercle (22).

11. Moissonneuse-batteuse (1) selon une des revendications 8 à 10, **caractérisée en ce que** l'élément de dérivation (25) présente une première partie qui est articulée sur l'élément de couvercle (22) et sur laquelle est disposée une deuxième partie qui est mobile par rapport à la première partie.

12. Moissonneuse-batteuse (1) selon une des revendications 2 à 11, **caractérisée en ce que** l'élément de fond (24) est réalisé d'une seule pièce ou en plusieurs parties, notamment en deux parties.

13. Moissonneuse-batteuse (1) selon une des revendications 2 à 12, **caractérisée en ce que** l'élément de fond (24) est fixé de façon amovible à l'épandeur à tôles d'éparpillement (18).
